(19) 

Europäisches Patentamt

European Patent Office

Office européen des brevets

(11) **EP 4 625 204 A1**

(12) **EUROPEAN PATENT APPLICATION**

(43) Date of publication:
**01.10.2025 Bulletin 2025/40**

(21) Application number: **25166223.5**

(22) Date of filing: **26.03.2025**

(51) International Patent Classification (IPC):
**G06F 16/3329** (2025.01)       **G06F 16/338** (2019.01)
**G06F 16/901** (2019.01)       **G06F 16/9032** (2019.01)
**G06F 16/9038** (2019.01)

(52) Cooperative Patent Classification (CPC):
**G06F 16/9038; G06F 16/33295; G06F 16/338;**
**G06F 16/9024; G06F 16/90332**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.03.2024 US 202418617024**

(71) Applicant: **UiPath, Inc.**
**New York NY 10017 (US)**

(72) Inventors:
• **EKE, Peter**
  **New York, 10017 (US)**
• **SHIELDS, Milo**
  **New York, 10017 (US)**
• **CAPRIOTTI, Isabella**
  **New York, 10017 (US)**

(74) Representative: **Ungria López, Javier**
**Avda. Ramón y Cajal, 78**
**28043 Madrid (ES)**

(54) **GRAPH-BASED INTERACTION INTERFACES FOR GENERATIVE PRE-TRAINED TRANSFORMS**

(57)     A method is provided. The method is executed by a connection engine implemented as a computer program within a computing environment. The connection engine executes a chat assistant utilizing generative artificial intelligence (AI) mode to perform the method. The method includes generating a graph-based interaction interface and processing interactions between a user and the chat assistant as nodes within the graph-based interaction interface. The method includes establishing connections between the nodes of the graph-based interaction interface. The connections enable context to be passed between the nodes. The method includes propagates an update to an interaction of a corresponding node as the context to other connected nodes.

FIG. 4

EP 4 625 204 A1

**Description**

FIELD

The present invention generally relates to generative pre-trained transforms, and more specifically, to graph-based interaction interfaces for generative pre-trained transforms.

BACKGROUND

Conventional chatbots have limitations despite their popularity. For example, conventional chatbots use context from past interactions in a current interaction, which limits a scope of the current interaction to that context (e.g., while generating new content (interaction), there is no way to include context from previous contents). As another example, conventional chatbots are difficult to reuse to generate similar outputs multiple times because repeating a whole interaction (e.g., lengthy back-and-forth interactions) is required to achieve such similar outputs. Further, conventional chatbots consume significant amounts of time to generate complex outputs (even when these complex outputs are similar) because the whole interaction must be performed for each complex output. As another example, conventional chatbots include no mechanism to establish connections between different interactions so that a resultant action depends on previous output. These limitations affect the use of conventional chatbots in multiple desirable businesses and personal use.

Accordingly, a graph-based interaction interfaces for generative pre-trained transforms solution is needed to overcome the limitation of conventional chatbots.

SUMMARY

According to one or more embodiments, a method is provided. The method is executed by a connection engine implemented as a computer program within a computing environment. The connection engine executes a chat assistant utilizing generative artificial intelligence (AI) mode to perform the method. The method includes generating a graph-based interaction interface and processing interactions between a user and the chat assistant as nodes within the graph-based interaction interface. The method includes establishing connections between the nodes of the graph-based interaction interface. The connections enable context to be passed between the nodes. The method includes propagates an update to an interaction of a corresponding node as the context to other connected nodes.

According to one or more embodiments or any of the method embodiments herein, the connection engine can be implemented as an apparatus, a system, and a computer program product.

BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:

FIG. 1 depicts a flowchart according to one or more embodiments.
FIG. 2 depicts an example graph-based interaction interface according to one or more embodiments.
FIG. 3 depicts an architectural diagram illustrating a computing system according to one or more embodiments.
FIG. 4 illustrates an example of a neural network that has been trained to recognize graphical elements in an image according to one or more embodiments.
FIG. 5 illustrates an example of a neuron according to one or more embodiments.
FIG. 6 depicts a flowchart illustrating a process for training artificial intelligence and/or machine learning (AI/ML) model(s) according to one or more embodiments.

Unless otherwise indicated, similar reference characters denote corresponding features consistently throughout the attached drawings.

DETAILED DESCRIPTION OF THE EMBODIMENTS

According to one or more embodiments, a connection engine that is executing a chat assistant that utilizes a generative artificial intelligence (AI) model and graph-based interaction interfaces for the generative AI model to establish

connections between interactions in the chat assistant. By way of example, all components of the connection engine at the level of a single node where a user interface is shown, input is provided, an output is generated, and updates are propagated. Note that operations of the connection engine go beyond a mere chat history and provide connections between interactions within a chat assistant as a technical effect and benefit.

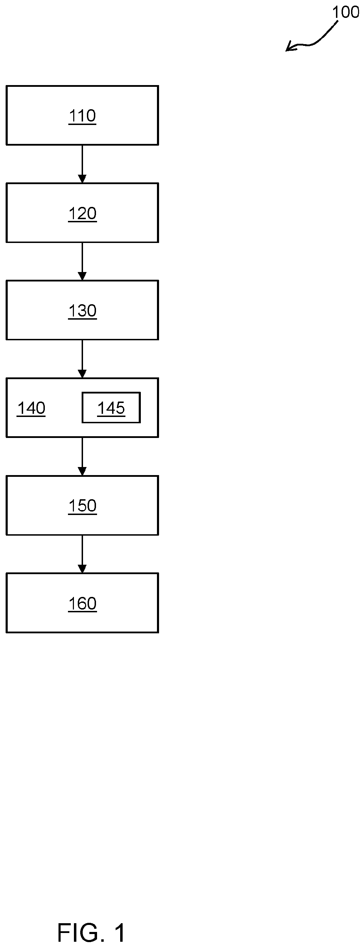

FIG. 1 is a flowchart illustrating a process 100 according to one or more embodiments. Generally, the process 100 demonstrates example operations of the chat assistant in concert with the generative AI model and the graph-based interaction interfaces to establish connections between interactions.

The process 100 is performed by the connection engine. The connection engine is implemented in a computer program in accordance with one or more embodiments. The computer program may be embodied on a non-transitory computer-readable medium, for example, as software implemented as processor executable code that is stored on a memory. The non-transitory computer-readable medium (e.g., the memory) may be, but is not limited to, a hard disk drive, a flash device, RAM, a tape, and/or any other such medium or combination of media used to store data. The computer program may include encoded instructions for controlling processor(s) of a computing system to implement all or part of the process described herein, which may also be stored on the computer-readable medium. The connection engine can be implemented by a combination of the processor executable code and hardware as described herein. The connection engine is necessarily rooted in the operations of the at least one processor to improve or replace the conventional chatbots.

The process 100 begins at block 110, where the connection engine generates user interface. The user interface can be any graphical user interface, for example, a graph-based interaction interface. The graph-based interaction interface can be a user facing interface of the chat assistant of the connection engine. According to one or more embodiments, the chat assistant can include a generative AI model. The generative AI model can include generative pre-trained transform (GPT) and/or a large language model (LLM) gateway. For example, the chat assistant can be an LLM-based chatbot providing a graph-based chat assistant.

At block 120, the connection engine receives a prompt or interaction (e.g., a first interaction). The prompt or interaction can be received from a user (e.g., a front-end developer) through the graph-based interaction interface. The prompt or interaction is represented as a node on the graph-based interaction interface. The prompt or interaction is editable at any point. The prompt or interaction can be considered a reusable AI workflow.

At block 130, the connection engine processes the prompt or interaction. The connection engine processes the prompt or interaction using the chat assistant. A results of processing the prompt or interaction cause the chat assistant to output a reply. The reply can be generated using the generative AI model, GPT, and/or LLM gateway of the chat assistant. The reply is provided in the graph-based interaction interface by the connection engine.

At block 140, the connection engine receives additional prompts or interactions (e.g., a second interaction or one or more second interactions). The additional prompts or interactions are represented as nodes (or within nodes) on the graph-based interaction interface. The additional prompts or interactions can be considered reusable AI workflows.

Note that the operations of blocks 130 and 140 can occur multiple times and in different orders so the connection engine can user the additional inputs through connections or via ambient context during the processing. Thus, as a technical effect and benefit, the user prompt will be combined with context when available.

According to one or more embodiments, the additional prompts or interactions can include new instances of user inputs. Further, the additional prompts or interactions can include responsive instances to the reply of the chat assistant by the user.

The additional prompts or interactions are editable at any point. For example, the additional prompts or interactions can include updates to the prompt or interaction (e.g., and therefor can be within the node as generated in block 120).

Accordingly, the additional prompts or interactions are can be one or more of new instances, responsive instances, and updates. For example, as represented by sub-block 145, the reply (e.g., output) is updated once the prompt or interaction (e.g., the first interaction) is edited. Additionally, user interactions can be reprocessed and propagated, any information at any stage can eventually propagate into processing (e.g., of block 130).

At block 150, the connection engine establishes connections. The connections can be established between different nodes of the graph-based interaction interface. The connections enable context to be passed between the nodes (e.g., existing nodes). The connections can include outputs of previous nodes in inputs to latter nodes. In this regard, for example, a complex output or document with multiple dependent parts can be expressed easily by the connections. The connections can be shown or established using one or more arrows on the graph-based interaction interface of the chat assistant. By way of example, the connection engine establishes one or more connections (e.g., using arrows) between different interactions (e.g., nodes of the graph-based interaction interface) in an LLM-based chat assistant.

At block 160, the connection engine propagates updates. According to one or more embodiments, once a connection is established, all connected interactions are updated in concert. For example, if a change is made in one of the prompts or interactions, a result of the change in that prompt or interaction is also reflected in outputs of other connected prompts or interaction. According to one or more embodiments, the connection engine can also provide ambient context.

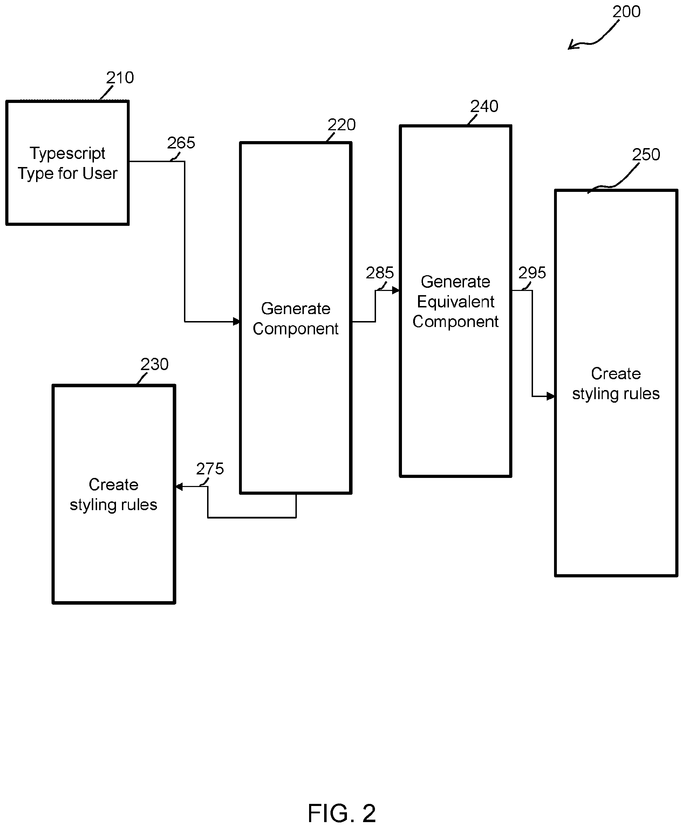

FIG. 2 depicts an example graph-based interaction interface 200 according to one or more embodiments. The example graph-based interaction interface 200 illustrates a user (e.g., a front-end developer) interacting with the chat assistant of the connection engine. For example, the front-end developer is interacting with the chat assistant to write complex code.

As shown in FIG. 2, the example graph-based interaction interface 200 includes a plurality of prompts 210, 220, 230, 240, and 250 (e.g., nodes) and a plurality of arrows 265, 275, 285, and 295 (e.g., connections). That is, each prompt 210, 220, 230, 240, and 250 is in a form of node with output. In each prompt 210, 220, 230, 240, and 250, the complex code is written and rewritten as the user interacts with the chat assistant of the connection engine. Further, the connection engine establishes connections in the form of the plurality of arrows 265, 275, 285, and 295 in concert with the user interactions. Thus, the arrows 265, 275, 285, and 295 are established between different the prompts 210, 220, 230, 240, and 250 of the graph-based interaction interface. According to one or more embodiments, the graph-based chat assistant enables the user to write an interaction once and edit the interaction whenever required for the other version of the complex code.

Accordingly, the connection engine provides, as a technical effect, benefit, and advantage, a mechanism to incorporate reusable AI workflows, generating new content by editing individual connected nodes (e.g., instead of redoing the entire interaction), creating multiple graphs quickly by using different types of content (interactions/nodes). It increases user productivity, saves time, and allows graphs to be shared between teams

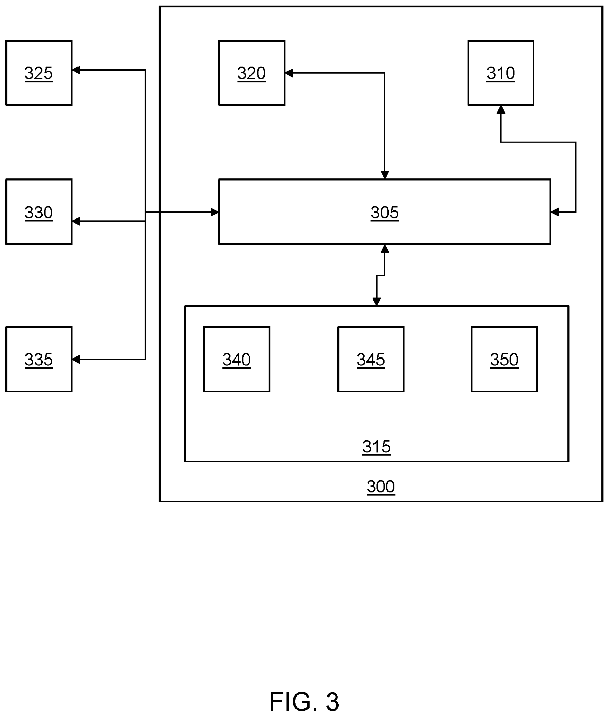

FIG. 3 is an architectural diagram illustrating a computing system 300 according to one or more embodiments. In some embodiments, computing system 300 may be one or more of the computing systems depicted and/or described herein. In certain embodiments, computing system 300 may be part of a hyper-automation system, such as that shown in FIGS. 1 and 2. Computing system 300 includes a bus 305 or other communication mechanism for communicating information, and processor(s) 310 coupled to bus 305 for processing information. Processor(s) 310 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 310 may also have multiple processing cores, and at least some of the cores may be configured to perform specific functions. Multi-parallel processing may be used in some embodiments. In certain embodiments, at least one of processor(s) 310 may be a neuromorphic circuit that includes processing elements that mimic biological neurons. In some embodiments, neuromorphic circuits may not require the typical components of a Von Neumann computing architecture.

Computing system 300 further includes a memory 315 for storing information and instructions to be executed by processor(s) 310. Memory 315 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 310 and may include volatile media, non-volatile media, or both. The media may also be removable, nonremovable, or both.

Additionally, computing system 300 includes a communication device 320, such as a transceiver, to provide access to a communications network via a wireless and/or wired connection. In some embodiments, communication device 320 may be configured to use Frequency Division Multiple Access (FDMA), Single Carrier FDMA (SC-FDMA), Time Division Multiple Access (TDMA), Code Division Multiple Access (CDMA), Orthogonal Frequency Division Multiplexing (OFDM), Orthogonal Frequency Division Multiple Access (OFDMA), Global System for Mobile (GSM) communications, General Packet Radio Service (GPRS), Universal Mobile Telecommunications System (UMTS), cdma2000, Wideband CDMA (W-CDMA), High-Speed Downlink Packet Access (HSDPA), High-Speed Uplink Packet Access (HSUPA), High-Speed Packet Access (HSPA), Long Term Evolution (LTE), LTE Advanced (LTE-A), 802.11x, Wi-Fi, Zigbee, Ultra-WideBand (UWB), 802.16x, 802.15, Home Node-B (HnB), Bluetooth, Radio Frequency Identification (RFID), Infrared Data Association (IrDA), Near-Field Communications (NFC), fifth generation (5G) New Radio (NR), any combination thereof, and/or any other currently existing or futureimplemented communications standard and/or protocol without deviating from the scope of the one or more embodiments herein. In some embodiments, communication device 320 may include one or more antennas that are singular, arrayed, panels, phased, switched, beamforming, beamsteering, a combination thereof, and or any other antenna configuration without deviating from the scope of the one or more embodiments herein.

Processor(s) 310 are further coupled via bus 305 to a display 325, such as a plasma display, a Liquid Crystal Display (LCD), a Light Emitting Diode (LED) display, a Field Emission Display (FED), an Organic Light Emitting Diode (OLED) display, a flexible OLED display, a flexible substrate display, a projection display, a 4K display, a high definition display, a Retina® display, an In-Plane Switching (IPS) display, or any other suitable display for displaying information to a user. Display 325 may be configured as a touch (haptic) display, a three-dimensional (3D) touch display, a multi-input touch display, a multi-touch display, etc. using resistive, capacitive, surface-acoustic wave (SAW) capacitive, infrared, optical imaging, dispersive signal technology, acoustic pulse recognition, frustrated total internal reflection, etc. Any suitable display device and haptic I/O may be used without deviating from the scope of the one or more embodiments herein.

A keyboard 330 and a cursor control device 335, such as a computer mouse, a touchpad, etc., are further coupled to bus 305 to enable a user to interface with computing system 300. However, in certain embodiments, a physical keyboard and mouse may not be present, and the user may interact with the device solely through display 325 and/or a touchpad (not shown). Any type and combination of input devices may be used as a matter of design choice. In certain embodiments, no physical input device and/or display is present. For instance, the user may interact with computing system 300 remotely via another computing system in communication therewith, or computing system 300 may operate autonomously.

Memory 315 stores software modules that provide functionality when executed by processor(s) 310. The modules include an operating system 340 for computing system 300. The modules further include a module 345 (such as a connection module implementing a connection engine) that is configured to perform all or part of the processes described herein or derivatives thereof.

According to one or more embodiments, the module 345 provides a chat assistant, utilizes a generative AI model, generates graph-based interaction interfaces, and establishs connections between interactions in the chat assistant. For instance, the module 345 provides processes the prompts or interactions as reusable AI workflows. For example, the module 345 generates a graph-based interaction interface, receives and processes the prompts or interactions to represent the prompts or interactions as nodes of the graph-based interaction interface, establishes connections between the nodes of the graph-based interaction interface, and propagates updates to one or more of the prompts or interactions to connected nodes. In this regard, the module 345 removes the limitations of conventional chatbots by utilizing the chat assistant, the generative AI model, the graph-based interaction interfaces, and the connections as described herein. According to one or more embodiments, the module 345 generates pre-training datasets by data cataloging, versioning data, and leveraging existing datasets. The connection engine converts the pre-training dataset into the JSON objects or other objects (i.e., the forms). According to one or more embodiments, the module 345 can utilize a generative AI model, GPT, LLM gateway, GPT-3, and/or other autoregressive language model that use deep learning to mimic human-like text. According to one or more embodiments, any workflow created by the connection engine through user interactions can be saved to a permanent storage (e.g., in a device or a cloud) so that those workflows may be restored, invoked, edited, or otherwise reused as needed.

Computing system 300 may include one or more additional functional modules 350 that include additional functionality.

One skilled in the art will appreciate that a "system" could be embodied as a server, an embedded computing system, a personal computer, a console, a personal digital assistant (PDA), a cell phone, a tablet computing device, a quantum computing system, or any other suitable computing device, or combination of devices without deviating from the scope of the one or more embodiments herein. Presenting the above-described functions as being performed by a "system" is not intended to limit the scope of embodiments herein in any way, but is intended to provide one example of the many embodiments. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the one or more embodiments herein.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the one or more embodiments herein.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

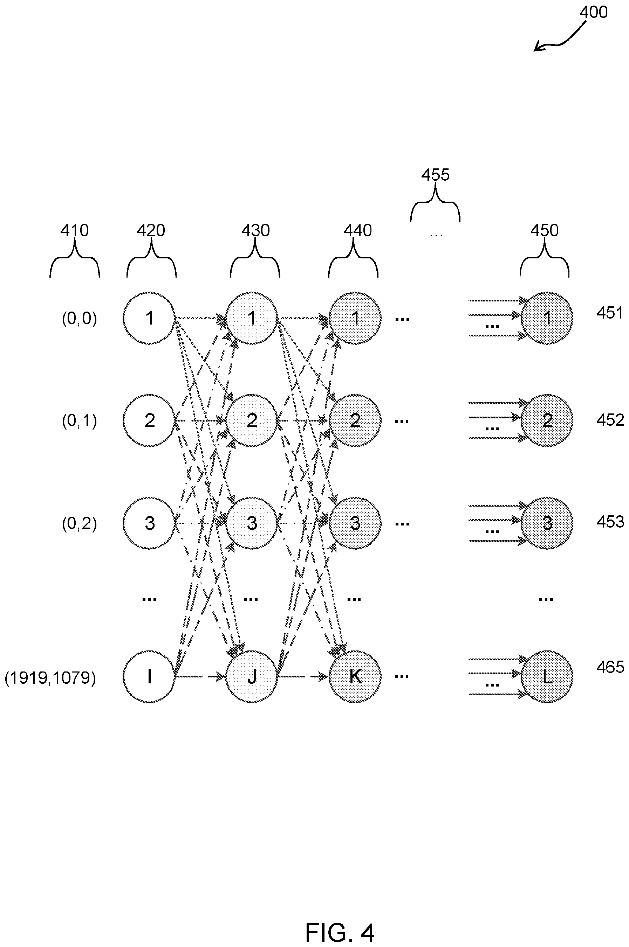

Various types of AI/ML models may be trained and deployed without deviating from the scope of the one or more embodiments herein. For instance, FIG. 4 illustrates an example of a neural network 400 that has been trained to recognize graphical elements in an image according to one or more embodiments. Here, neural network 400 receives pixels (as represented by column 410) of a screenshot image of a 1920 × 1080 screen as input for input "neurons" 1 to I of an input layer (as represented by column 420). In this case, I is 2,073,600, which is the total number of pixels in the screenshot image.

Neural network 400 also includes a number of hidden layers (as represented by column 430 and 440). Both DLNNs and shallow learning neural networks (SLNNs) usually have multiple layers, although SLNNs may only have one or two layers in some cases, and normally fewer than DLNNs. Typically, the neural network architecture includes the input layer, multiple intermediate layers (e.g., the hidden layers), and an output layer (as represented by column 450), as is the case in neural network 400.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 4, pixels provided as the input layer are fed as inputs to the J neurons of hidden layer 1. While all pixels are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the one or more embodiments herein.

Hidden layer 2 (430) receives inputs from hidden layer 1 (420), hidden layer 3 receives inputs from hidden layer 2 (430), and so on for all hidden layers until the last hidden layer (as represented by the ellipses 455) provides its outputs as inputs for the output layer. It should be noted that numbers of neurons I, J, K, and L are not necessarily equal, and thus, any desired number of layers may be used for a given layer of neural network 400 without deviating from the scope of the one or more embodiments herein. Indeed, in certain embodiments, the types of neurons in a given layer may not all be the same.

Neural network 400 is trained to assign a confidence score to graphical elements believed to have been found in the image. In order to reduce matches with unacceptably low likelihoods, only those results with a confidence score that meets or exceeds a confidence threshold may be provided in some embodiments. For instance, if the confidence threshold is 80%, outputs with confidence scores exceeding this amount may be used and the rest may be ignored. In this case, the output layer indicates that two text fields (as represented by outputs 461 and 462), a text label (as represented by output 463), and a submit button (as represented by output 465) were found. Neural network 400 may provide the locations, dimensions, images, and/or confidence scores for these elements without deviating from the scope of the one or more embodiments herein, which can be used subsequently by an RPA robot or another process that uses this output for a given purpose.

It should be noted that neural networks are probabilistic constructs that typically have a confidence score. This may be a score learned by the AI/ML model based on how often a similar input was correctly identified during training. For instance, text fields often have a rectangular shape and a white background. The neural network may learn to identify graphical elements with these characteristics with a high confidence. Some common types of confidence scores include a decimal number between 0 and 1 (which can be interpreted as a percentage of confidence), a number between negative ∞ and positive ∞, or a set of expressions (e.g., "low," "medium," and "high"). Various post-processing calibration techniques may also be employed in an attempt to obtain a more accurate confidence score, such as temperature scaling, batch normalization, weight decay, negative log likelihood (NLL), etc.

"Neurons" in a neural network are mathematical functions that that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

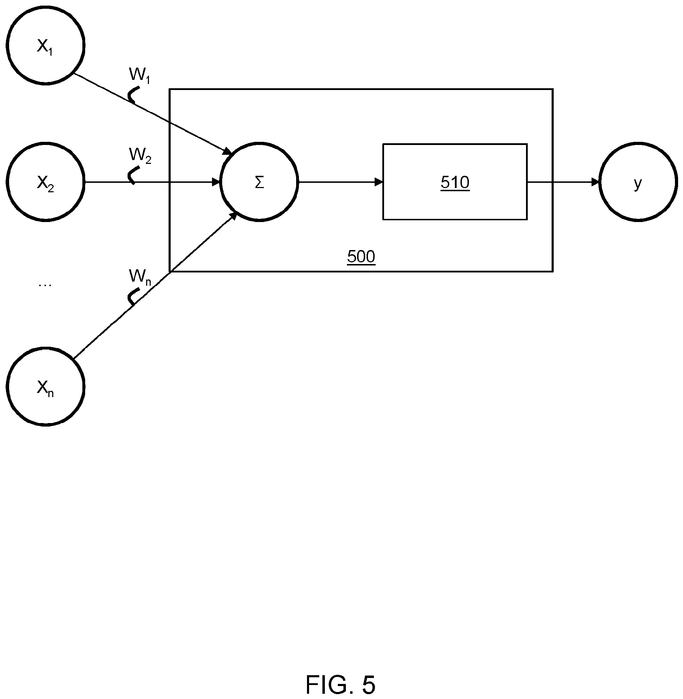

An example of a neuron 500 is shown in FIG. 5. Inputs $x_1, x_2, \ldots, x_n$ from a preceding layer are assigned respective weights $w_1, w_2, \ldots, w_n$. Thus, the collective input from preceding neuron 1 is $w_1x_1$. These weighted inputs are used for the neuron's summation function modified by a bias, such as:

$$\sum_{i=1}^{m}(w_i x_i) + bias \quad (1)$$

This summation is compared against an activation function $f(x)$ (as represented by block 510) to determine whether the neuron "fires". For instance, $f(x)$ may be given by:

$$f(x) = \begin{cases} 1 \text{ if } \sum wx + bias \geq 0 \\ 0 \text{ if } \sum wx + bias < 0 \end{cases} \quad (2)$$

The output $y$ of neuron 500 may thus be given by:

$$y = f(x)\sum_{i=1}^{m}(w_i x_i) + bias \quad (3)$$

In this case, neuron 500 is a single-layer perceptron. However, any suitable neuron type or combination of neuron types may be used without deviating from the scope of the one or more embodiments herein. It should also be noted that the ranges of values of the weights and/or the output value(s) of the activation function may differ in some embodiments without deviating from the scope of the one or more embodiments herein.

The goal, or "reward function" is often employed, such as for this case the successful identification of graphical elements in the image. A reward function explores intermediate transitions and steps with both short-term and long-term rewards to guide the search of a state space and attempt to achieve a goal (e.g., successful identification of graphical elements, successful identification of a next sequence of activities for an RPA workflow, etc.).

During training, various labeled data (in this case, images) are fed through neural network 400. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the AI/ML model is not improving after a certain number of training iterations, a data scientist may modify the reward function, provide indications of where non-identified graphical elements are, provide corrections of misidentified graphical elements, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input $x$ is processed through a series of $N$ nonlinear activity functions $f_i$ between each layer $i = 1, \ldots, N$ of the network, with the output at a given layer first multiplied by a synaptic matrix $W_i$, and with a bias vector $b_i$ added. The network output $o$, given by

$$o = f_N(W_N f_{N-1}(W_{N-1} f_{N-2}(\ldots f_1(W_1 x + b_1) \ldots) + b_{N-1}) + b_N) \quad (4)$$

**In** some embodiments, $o$ is compared with a target output $t$, resulting in an error $E = \frac{1}{2}\|o - t\|^2$, which is desired to be minimized.

Optimization in the form of a gradient descent procedure may be used to minimize the error by modifying the

synaptic weights $W_j$ for each layer. The gradient descent procedure requires the computation of the output $o$ given an input $x$ corresponding to a known target output $t$, and producing an error $o - t$. This global error is then propagated backwards giving local errors for weight updates with computations similar to, but not exactly the same as, those used for forward propagation. In particular, the backpropagation step typically requires an activity function of the form $p_j(n_j) = f_j'(n_j)$, where $n_j$ is the network activity at layer $j$ (i.e., $n_j = W_j o_{j-1} + b_j$) where $o_j = f_j(n_j)$ and the apostrophe ' denotes the derivative of the activity function $f$.

The weight updates may be computed via the formulae:

$$d_j = \begin{cases} (o - t) \circ p_j(n_j), & j = N \\ W_{j+1}^{\mathrm{T}} d_{j+1} \circ p_j(n_j), & j < N \end{cases} \quad (5)$$

$$\frac{\partial E}{\partial W_{j+1}} = d_{j+1}\left(o_j\right)^{\mathrm{T}} \quad (6)$$

$$\frac{\partial E}{\partial b_{j+1}} = d_{j+1} \quad (7)$$

$$W_j^{\mathrm{new}} = W_j^{\mathrm{old}} - \eta \frac{\partial E}{\partial W_j} \quad (8)$$

$$b_j^{\mathrm{new}} = b_j^{\mathrm{old}} - \eta \frac{\partial E}{\partial b_j} \quad (9)$$

**where** $\circ$ denotes a Hadamard product (i.e., the element-wise product of two vectors), $^{\mathrm{T}}$ denotes the matrix transpose, and $o_j$ denotes $f_j(W_j o_{j-1} + b_j)$, with $o_0 = x$. Here, the learning rate $\eta$ is chosen with respect to machine learning considerations. Below, $\eta$ is related to the neural Hebbian learning mechanism used in the neural implementation. Note that the synapses $W$ and $b$ can be combined into one large synaptic matrix, where it is assumed that the input vector has appended ones, and extra columns representing the $b$ synapses are subsumed to $W$.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the one or more embodiments herein. Once trained on the training data, the AI/ML model may be tested on a set of evaluation data that the AI/ML model has not encountered before. This helps to ensure that the AI/ML model is not "over fit" such that it identifies graphical elements in the training data well, but does not generalize well to other images.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model.

In certain embodiments, a collection of trained AI/ML models may be used to accomplish a task, such as employing an AI/ML model for each type of graphical element of interest, employing an AI/ML model to perform OCR, deploying yet another AI/ML model to recognize proximity relationships between graphical elements, employing still another AI/ML model to generate an RPA workflow based on the outputs from the other AI/ML models, etc. This may collectively allow the AI/ML models to enable semantic automation, for instance.

Some embodiments may use transformer networks such as SentenceTransformers™, which is a Python™ framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

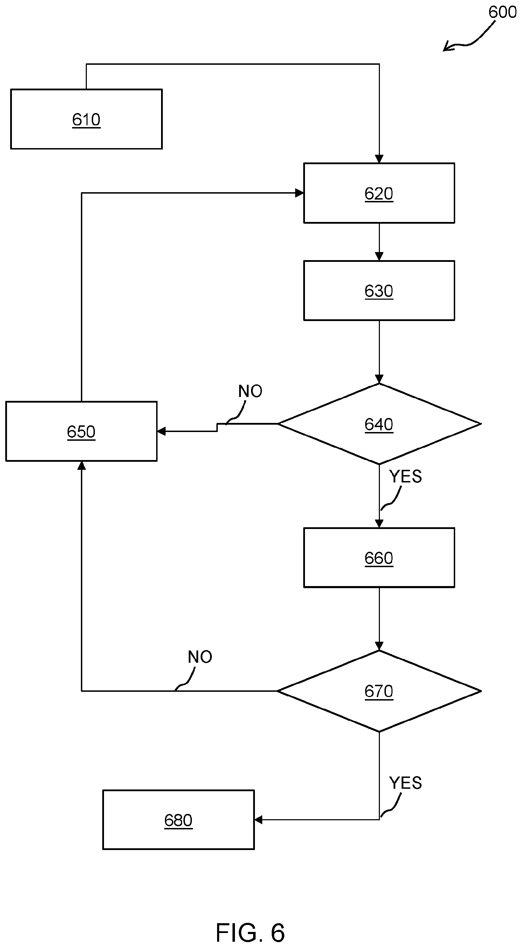

FIG. 6 is a flowchart illustrating a process 600 for training AI/ML model(s) according to one or more embodiments. Note that the process 600 can also be applied to other UI learning operations, such as for NLP and chatbots. The process begins with training data, for example providing labeled data as illustrated in FIG. 6, such as labeled screens (e.g., with graphical elements and text identified), words and phrases, a "thesaurus" of semantic associations between words and phrases such that similar words and phrases for a given word or phrase can be identified, etc. at block 610. The nature of the training data that is provided will depend on the objective that the AI/ML model is intended to achieve. The AI/ML model is then trained over multiple epochs at block 620 and results are reviewed at block 630.

If the AI/ML model fails to meet a desired confidence threshold at decision block 640 (the process 600 proceeds according to the NO arrow), the training data is supplemented and/or the reward function is modified to help the AI/ML model achieve its objectives better at block 650 and the process returns to block 620. If the AI/ML model meets the confidence threshold at decision block 640 (the process 600 proceeds according to the YES arrow), the AI/ML model is tested on evaluation data at block 660 to ensure that the AI/ML model generalizes well and that the AI/ML model is not over fit with respect to the training data. The evaluation data may include screens, source data, etc. that the AI/ML model has not processed before. If the confidence threshold is met at decision block 670 for the evaluation data (the process 600 proceeds according to the Yes arrow), the AI/ML model is deployed at block 680. If not (the process 600 proceeds according to the NO arrow), the process returns to block 680 and the AI/ML model is trained further.

The process 100 performed in FIG. 1 and the process 600 performed in FIG. 6 may be performed by a connection engine implemented in a computer program in accordance with one or more embodiments. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., the module 345 of FIG. 3) to implement all or part of the processes described herein, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments, as generally described and illustrated in the figures herein, may be arranged and designed in a wide variety of different configurations. Thus, the detailed description of the embodiments, as represented in the attached figures, is not intended to limit the scope as claimed, but is merely representative of selected embodiments.

The features, structures, or characteristics described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized should be or are in any single embodiment. Rather, language referring to the features and advantages is understood to mean that a specific feature, advantage, or characteristic described in connection with an embodiment is included in one or more embodiments. Thus, discussion of the features and advantages, and similar language, throughout this specification may, but do not necessarily, refer to the same embodiment.

Furthermore, the described features, advantages, and characteristics of the one or more embodiments herein may be combined in any suitable manner. One skilled in the relevant art will recognize that this disclosure can be practiced without one or more of the specific features or advantages of a particular embodiment. In other instances, additional features and advantages may be recognized in certain embodiments that may not be present in all embodiments.

One having ordinary skill in the art will readily understand that this disclosure may be practiced with steps in a different order, and/or with hardware elements in configurations which are different than those which are disclosed. Therefore, although this disclosure has been described based upon these preferred embodiments, it would be apparent to those of skill in the art that certain modifications, variations, and alternative constructions would be apparent, while remaining within the spirit and scope of this disclosure. In order to determine the metes and bounds of this disclosure, therefore, reference should be made to the appended claims.

## Claims

1. A method executed by a connection engine implemented as a computer program within a computing environment, the connection engine executing a chat assistant utilizing generative artificial intelligence (AI) model, the method comprising:

generating a graph-based interaction interface;
processing interactions between a user and the chat assistant as nodes within the graph-based interaction interface;
establishing connections between the nodes of the graph-based interaction interface, the connections enabling context to be passed between the nodes; and
propagates an update to an interaction of a corresponding node as the context to other connected nodes.

2. The method of claim 1, wherein the chat assistant comprises a large language model (LLM)-based chatbot providing a graph-based chat assistant.

3. The method of claim 1, wherein the generative AI model comprises a large language model (LLM) gateway.

4. The method of claim 1, wherein the connections comprise outputs of a previous node as inputs to a latter node.

5. The method of claim 1, wherein the connections express a complex output or document with multiple dependent parts.

6. The method of claim 1, wherein the connections are displayed by the graph-based interaction interface of the chat assistant as arrows.

7. The method of claim 1, wherein all connected interactions are updated in concert once a connection is established.

8. The method of claim 1, wherein the computing environment comprises a cloud environment.

9. The method of claim 1, wherein the interaction comprises a reusable artificial intelligence (AI) workflow.

10. The method of claim 1, wherein the chat assistant outputs a reply using a generative artificial intelligence (AI).

11. A system comprising:

a memory storing a computer program for a connection engine executing a chat assistant utilizing generative artificial intelligence (AI) model; and
at least one processor executes the computer program to cause the connection engine and the system to perform:

generating a graph-based interaction interface;
processing interactions between a user and the chat assistant as nodes within the graph-based interaction interface;
establishing connections between the nodes of the graph-based interaction interface, the connections enabling context to be passed between the nodes; and
propagates an update to an interaction of a corresponding node as the context to other connected nodes.

12. The system of claim 11, wherein the chat assistant comprises a large language model (LLM)-based chatbot providing a graph-based chat assistant.

13. The system of claim 11, wherein the generative AI model comprises a large language model (LLM) gateway.

14. The system of claim 11, wherein the connections express a complex output or document with multiple dependent parts.

15. The system of claim 11, wherein the connections are displayed by the graph-based interaction interface of the chat assistant as arrows.

100

```
┌─────────────────┐
│       110       │
└─────────────────┘
         │
         ▼
┌─────────────────┐
│       120       │
└─────────────────┘
         │
         ▼
┌─────────────────┐
│       130       │
└─────────────────┘
         │
         ▼
┌─────────────────────┐
│  140    ┌───────┐   │
│         │  145  │   │
│         └───────┘   │
└─────────────────────┘
         │
         ▼
┌─────────────────┐
│       150       │
└─────────────────┘
         │
         ▼
┌─────────────────┐
│       160       │
└─────────────────┘
```

FIG. 1

200

210

Typescript
Type for User

265

220

Generate
Component

285

240

Generate
Equivalent
Component

295

250

Create
styling rules

230

Create
styling rules

275

FIG. 2

FIG. 3

FIG. 4

FIG. 5

FIG. 6

Europäisches
Patentamt
European
Patent Office
Office européen
des brevets

# EUROPEAN SEARCH REPORT

**Application Number**

EP 25 16 6223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAN LIANG ET AL: "C5: Towards Better Conversation Comprehension and Contextual Continuity for ChatGPT", ARXIV.ORG, CORNELL UNIVERSITY LIBRARY, 201 OLIN LIBRARY CORNELL UNIVERSITY ITHACA, NY 14853, 10 August 2023 (2023-08-10), XP091590602, * section 4.2, caption of fig. 2; figures 2,5 * | 1-15 | INV. G06F16/3329 G06F16/338 G06F16/901 G06F16/9032 G06F16/9038 |

- - - - -

**TECHNICAL FIELDS SEARCHED (IPC)**

G06F

The present search report has been drawn up for all claims

| Place of search | Date of completion of the search | Examiner |
|---|---|---|
| The Hague | 26 June 2025 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)